# EUROPEAN PATENT APPLICATION

(11) **EP 4 489 209 A1**
(43) Date of publication of application: **08.01.2025**
(21) Application number: 23183244.5
(22) Date of filing: 04.07.2023
(51) Int. Cl.: H01M 50/503, H01M 50/522

(54) **A BUSBAR AND METHOD**

(71) Applicant: Valmet Automotive Oyj, 23501 Uusikaupunki (FI)
(72) Inventor: Jelec, Tomislav, 70806 Kornwestheim (DE); Eiffler, Sven, 74743 Seckach (DE)
(74) Representative: Papula Oy

(57) **Abstract**

A busbar (1) and a battery (100). The busbar (1) has a length (L) in a x-direction (X), and width (W) as well as thickness (T), said width and thickness being perpendicular to the length. The busbar (1) comprises a length compensation element (2), dividing the busbar in a first section (3a) and a second section (3b). The length compensation element (2) is wider as the first section (3a) and the second section (3b). The length compensation element (2) comprises at least two elongated elements (4) of the solid metal or alloy and an opening (5) between said elongated elements (4), the lengthwise axis (6) of the elongated elements crossing the x-direction (X) and the opening (5) extending through the thickness (T) of the length compensation element (2). The elements (4) are configured to bend such that thermal expansion of the busbar (1) in at least said x-direction (X) is compensated.

## Description

### BACKGROUND

The invention relates to a busbar made of a solid metal or alloy, having length in a x-direction, and width as well as thickness, said width and thickness being perpendicular to the length.

The invention further relates to a battery.

Busbars are solid metal bars used to carry current e.g. in batteries. Typically made from copper or aluminum, busbars are rigid and flat. The busbars are able to carry more current than cables with the same cross-sectional area. This makes busbars ideal for some high-voltage connections e.g. in electric vehicles (EVs) and a key component of the electrical architectures of tomorrow's vehicles.

There are several circumstances where introducing a level of flexibility into the busbar might be necessary. The busbar may be too rigid and thus it can be difficult to connect the ends due to manufacturing tolerances. Additionally, a rigid busbar is unforgiving when it comes to thermal expansion. This problem becomes emphasized when long busbars are to be used in the battery.

### BRIEF DESCRIPTION

Viewed from a first aspect, there can be provided a busbar made of a solid metal or alloy, having length in a x-direction, and width as well as thickness, said width and thickness being perpendicular to the length, the busbar comprising a length compensation element, dividing the busbar in a first section on a first side of the length compensation element and a second section on a second side of said length compensation element, said length compensation element being wider as the first section and the second section, said length compensation element comprising at least two elongated elements of the solid metal or alloy and an opening between said elongated elements, the lengthwise axis of the elongated elements crossing the x-direction and the opening extending through the thickness of the length compensation element, the at least two elongated elements configured to bend such that thermal expansion of the busbar in at least said x-direction is compensated.

Thereby a busbar that is able to adapt to manufacturing tolerances and thermal expansions may be achieved.

Viewed from a further aspect, there can be provided a battery, comprising the busbar as defined in the first aspect, being arranged for connecting selected current flowing routes thereof.

Thereby a battery the construction of which stands well thermal expansions of at least busbars thereof may be achieved.

The busbar and the method are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

Various embodiments of the first and further aspects may comprise at least one feature from the following paragraphs:
In one embodiment, the combined cross-sectional area of the at least two elongated elements is same or at least substantially same as the cross-sectional area of the first section and the cross-sectional area of the second section.

An advantage is that the electric resistance of the length compensation element corresponds to that of the sections, and thus a homogeneous temperature over the sections and the length compensation element may be provided.

In one embodiment, the length compensation element comprises a first half part and a second half part, arranged side by side in relation to the x-direction, and that the first section of the busbar is arranged to join to the first half part, and the second section of the busbar is arranged to join to the second half part.

An advantage is that the flexibility capacity of the length compensation element may be maximised.

In one embodiment, the second section of the busbar is arranged to join to the length compensation element by a connecting section that is configured to displace said second section sideways from the side of the second half part to the side of the first half part.

An advantage is that the flexibility capacity of the length compensation element may be maximised and, at the same time, the first and the second sections may be arranged on at least essentially same line.

In one embodiment, the at least two elongated elements are arranged parallel.

An advantage is that a series of elements that bend homogeneously may be achieved.

In one embodiment, said at least two elongated elements are arranged perpendicular to the x-direction.

An advantage is that the length compensation element may bend similar ways in both directions of the x-direction.

In one embodiment, the opening is straight.

An advantage is that the structure is simple.

In one embodiment, the opening comprises at least one curve.

An advantage is that ability to length compensation also in y-direction may be promoted.

In one embodiment, the opening is L-shaped.

An advantage is that the length compensation element may also provide an enhanced ability for length compensation also in y-direction.

In one embodiment, the length compensation element, the first section and the second section are on a same imaginary plane.

An advantage is that the busbar has a very low structure in z-direction.

In one embodiment, the length compensation element comprises a bend around the x-direction, and the width of the first section is on a first imaginary plane and the width of the second section is on a second imaginary plane that cuts said first imaginary plane.

An advantage is that the busbar may be shaped to suit in various three-dimensional applications.

In one embodiment, the first section, the second section and the length compensation element are of a same piece of the material.

An advantage is that the structure is simple and the current-carrying capacity is not hampered by excessive joints.

In one embodiment, the busbar has a monolayer structure.

An advantage is that the structure is simple.

In one embodiment, the busbar has a multilayer structure.

An advantage is that the length compensation in z-direction may also be provided.

### BRIEF DESCRIPTION OF FIGURES

Some embodiments illustrating the present disclosure are described in more detail in the attached drawings, in which
Figure 1 is a schematic view of a detail of a busbar seen from above,
Figure 2 is a schematic sectional views of the detail shown in Figure 1,
Figures 3a - 3e are schematic views of various length compensation elements,
Figure 4 is a schematic view of a detail of a busbar, and
Figure 5 is a schematic view of a battery in partial cross-section.

In the figures, some embodiments are shown simplified for the sake of clarity. Similar parts are marked with the same reference numbers in the figures.

### DETAILED DESCRIPTION

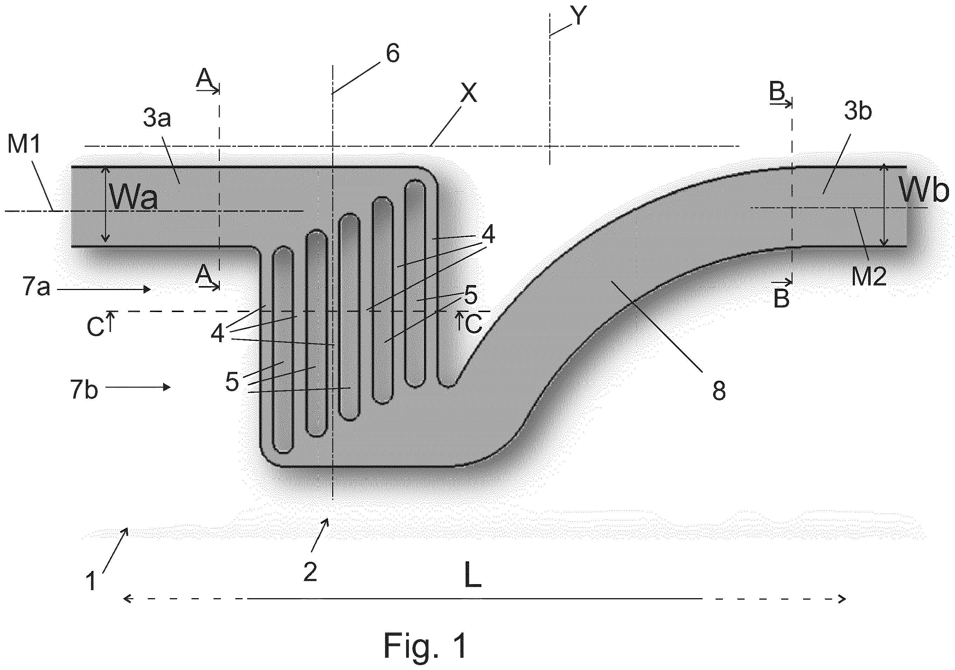

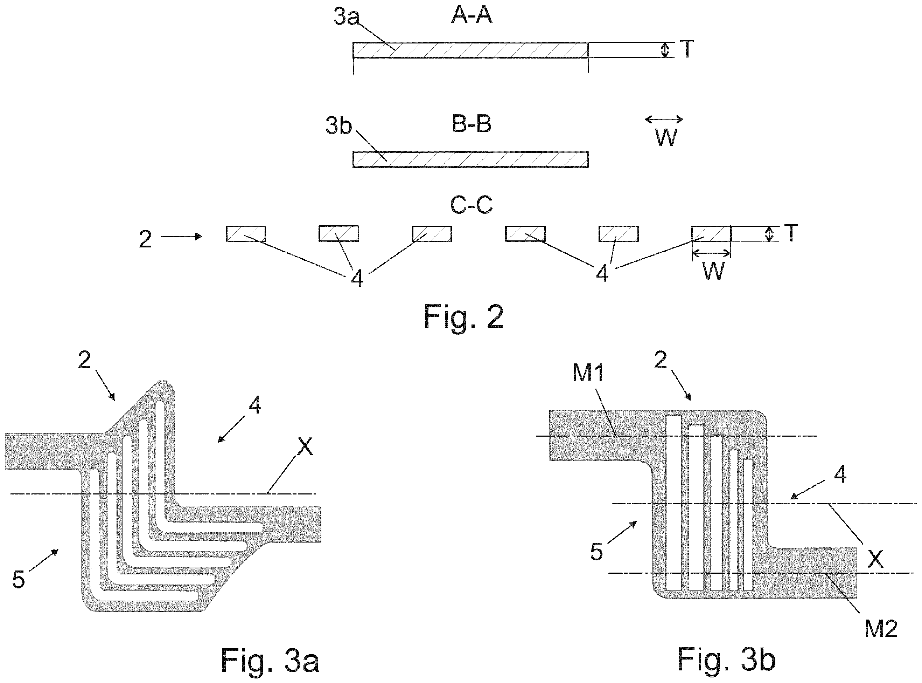

**Figure 1** is a schematic view of a detail of a busbar seen from above, and **Figure 2** is a schematic sectional view of the busbar shown in Figure 1.

The busbar 1 is basically a rod made of a solid metal or alloy, such as aluminium or copper.

The busbar 1 has a length L in a x-direction X, and a width W as well as a thickness T that are perpendicular to the length L. In one embodiment, such as shown in Figure 1, the width W extends in a y-direction Y and the thickness T in a z-direction perpendicular to the x-direction X and the y-direction Y. As shown in Figure 2, the width W is much more than the thickness T. According to an aspect, the length L may be hundreds of millimeters or even thousands of millimeters, such as 2000 mm, the width W about 10 mm and the thickness T about one millimeter, for instance.

In one embodiment, the busbar 1 has a monolayer structure. This means that the thickness T of the busbar 1 comprises one material layer only. In another embodiment, the busbar 1 has a multilayer structure. This means that the busbar 1 is construed of at least two material layers superimposed so that the thickness T is created.

The busbar 1 comprises a length compensation element 2 configured to divide the busbar in a first section 3a on a first side of the length compensation element 2 and a second section 3b on a second side of said length compensation element 2.

In one embodiment, the length compensation element 2 is arranged to midway or at least essentially midway of the length L of the busbar 1. In other embodiments, the length compensation element 2 is arranged substantially closer to one of its end than another end.

In one embodiment, the busbar 1 comprises just one length compensation element 2. In other embodiments, the busbar 1 comprises multiple length compensation elements 2.

In one embodiment, the first section 3a, the second section 3b and the length compensation element 2 are all made of a same piece of the material.

The length compensation element 2 is wider as the first section 3a and the second section 3b. In other words, the length compensation element 2 has a greater dimension in Y-direction than the first and the second section 3a, 3b.

The length compensation element 2 comprises at least two elongated elements 4 an opening 5 between said elongated elements. The elongated elements 4 are arranged so that their lengthwise axes 6 cross the x-direction X. The opening 5 extends through the thickness T of the length compensation element 2.

The number of the elongated elements 4 may vary from two to e.g. ten, or to even higher numbers. The embodiment shown in Figure 1 comprises six elongated elements 4 and five openings 5.

In one embodiment, such as shown in Figure 1, the openings 5 are all straight and the elongated elements 4 are arranged parallel and perpendicular to the x-direction X. However, there are other alternatives to arrange the elongated elements and the openings. Some of these alternatives are introduced in Figures 3a-3f.

The structure of alternating elongated elements and openings "weakens" the structure of the busbar and allows the elongated elements 4 to bend such that thermal expansion of the busbar 1 is compensated at least in the lengthwise direction i.e. x-direction X. The extent of the thermal expansion depends on material of the busbar and temperature thereof: it may be in range of some millimeters in long busbars.

In one embodiment, the combined cross-sectional area of the elongated elements 4 is same or at least substantially same as the cross-sectional area of the first section 3a and the cross-sectional area of the second section 3b. In other words, the cross-sectional area of the first section 3a defined by its width W and thickness T is same or at least substantially same as the combined cross-sectional area of the elongated elements 4. Figure 2 is showing the cross-sections of the first section 3a (A-A), the second section 3b (B-B) and the combined cross-sectional area of the elongated elements 4 (C-C) as shown in Figure 1. The term "substantially same" is defined such that the electric resistance of the length compensation element 2 does not cause an excessive temperature rise during use of the battery.

In one embodiment, the length compensation element 2, the first section 3a and the second section 3b are all on a same imaginary plane the normal of which is the direction of thickness T. In one embodiment, the positions of lengthwise sections of the busbar 1 may vary in z-direction.

The length compensation element 2 comprises a first half part 7a and a second half part 7b that are arranged side by side in relation to the x-direction X, as shown in Figure 1. In one embodiment, the first section 3a of the busbar joins to the first half part 7a, whereas the second section 3b joins to the second half part 7b. In one embodiment, the second section 3b is arranged to join to the length compensation element 2 by a connecting section 8 that displaces the second section 3b sideways from the side of the second half part 7b to the side of the first half part 7a. The connecting section 8 may have curved shape, such as shown 1 in Figure, or some another shape.

In one embodiment, the middle axis M1, M2 of the first and the second section 3a, 3b lies at least substantially on a same line that is parallel with the x-direction X. In one embodiment, the middle axis M1 of the first section 3a is not parallel with the middle axis M2 of the second section 3a.

Figures 3a - 3f are schematic views of various length compensation elements.

In one embodiment, such as shown in **Figure 3a****,** the elongated element 4 and the opening 5 are L-shaped. The branches of the L-shape may be orthogonal, such as shown, or they may have a smaller or larger mutual angle. In the embodiment shown in Figure 3a, one of the branches of the L-shape is arranged orthogonal with the X-direction, but this is not always the case. In other words, the branches may be oblique with the X-direction.

In one embodiment the length compensation element 2 comprises elongated elements 4 varying in their length, width and/or shape. Similarly, the length compensation element 2 may comprise openings 5 that vary in their length, width and/or shape. One such an embodiment is shown in **Figure 3b****.**

In one embodiment, such as shown in Figure 3b, the first section 3 and the second section 3b are joined to the length compensation element 2 such that their middle axes M1, M2 are on different lines that are parallel with the x-direction. In another embodiment, the first section 3 and the second section 3b are joined to the length compensation element 2 as above, but the middle axis M1 of the first section 3a is not parallel with the middle axis M2 of the second section 3a.

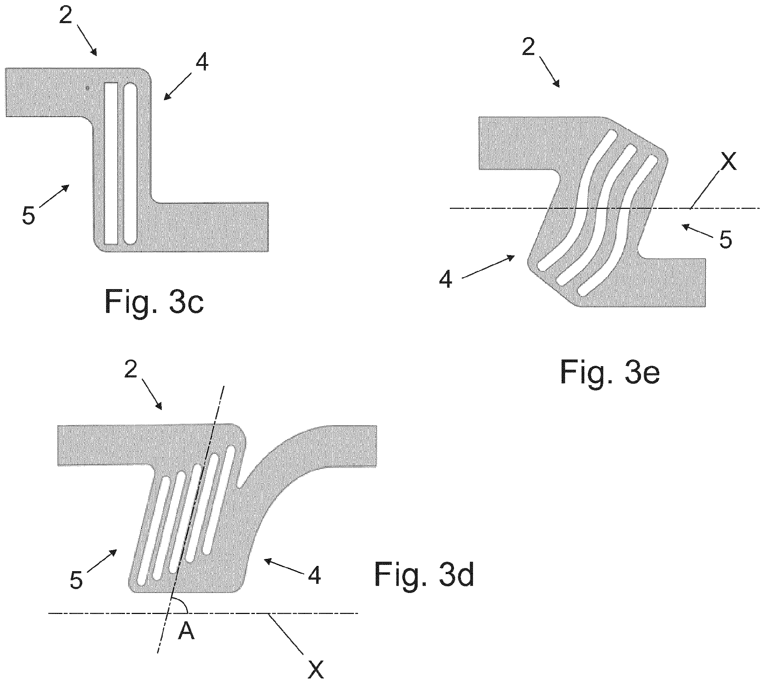

The details of the elongated elements 4 and the openings 5 may vary may ways. In one embodiment, the opening 5 has rounded shapes, such as shown right in **Figure 3c****,** and in another embodiment the opening has rather sharp shapes, such as shown left in Figure 3c.

In one embodiment, the elongated elements 4 and the openings 5 are not perpendicular to but have an oblique angle A with the x-direction, such as shown in **Figure 3d****.**

In one embodiment, such as shown in **Figure 3e****,** the elongated element 4 and the opening 5 comprises at least one curve 9. In the embodiment shown in Figure 32, the shape of the opening 5 is like a gentle S-shape, but other shapes are also possible.

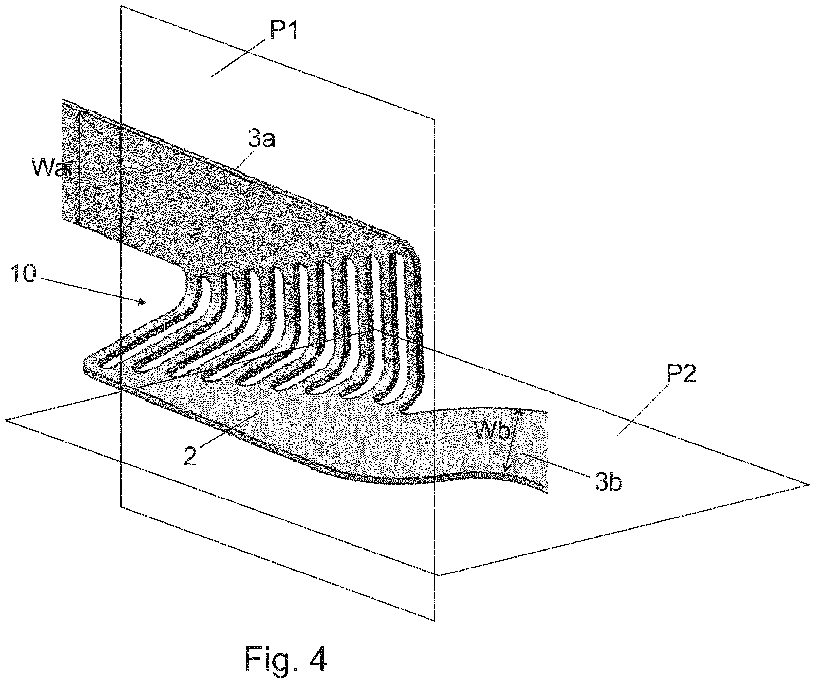

**Figure 4** is a schematic view of a busbar. In one embodiment, the length compensation element 2 have a bend 10 where it bends around the x-direction X. In Figure 4 the bend 10 is 90°, but in other embodiments the bend may be less or more than 90°. Due to the bend 10, the first section 3a or its width Wa, is on a first imaginary plane P1 and the width Wb of the second section is on a second imaginary plane P2 that cuts said first imaginary plane.

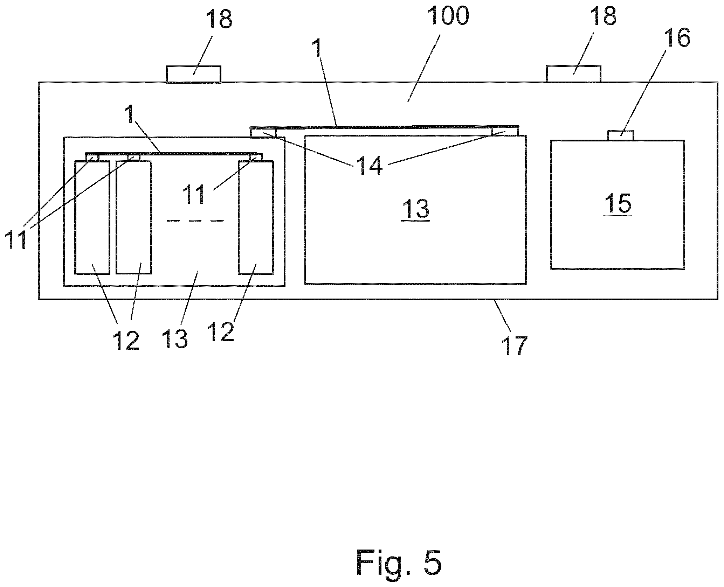

**Figure 5** is a schematic view of a battery in partial cross-section. Selected current flowing routes thereof may be created by the busbar 1 described in this disclosure.

In one embodiment, the battery 100 is a drive battery of a fully or partly electricity-powered vehicle, such as a hybrid-powered car or an electric car. In another embodiment, the battery 100 is a battery of a stationary electricity source. The battery 100 may contain a casing or a housing 17 and battery terminals 18 through which the battery 100 is connected to a load or a charger.

In one embodiment, the battery cells 12 are arranged in battery modules 13. The battery 100 may comprise one battery module 13, but typically several battery modules 13. In one embodiment, the busbar 1 described in this disclosure is arranged for interconnecting in an electrically conductive way cell terminals 11 in a same electrical polarity in at least one of the battery modules of the battery 100. In one embodiment, all the battery modules 13 of the battery comprises the busbar 1 described in this disclosure.

In one embodiment, the interconnected battery cells 12 in the battery module 13 are connected in an electrically conductive way to a module terminal 14 by using the busbar 1 described in this disclosure.

In one embodiment, the module terminals 14 are interconnected in an electrically conductive way by using the busbar 1 described in this disclosure.

In one embodiment, the interconnected module terminals 14 or the interconnected cell terminals 11 are connected in an electrically conductive way to the battery terminals 18 by using the busbar 1 described in this disclosure.

Typically, the battery 100 further comprises the other necessary elements to operate the battery cells and the battery modules. In one embodiment, said other necessary elements comprises a battery management controller (BMC) 15. The BMC 15 may comprise a BMC terminal 16 that is connected to e.g. the battery cells by using the busbar 1 described in this disclosure.

The busbar 1 may be connected to the terminals 11, 14, 16 by e.g. weldings.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: busbar
- 2: length compensation element
- 3a, b: first and second section
- 4: elongated element
- 5: opening
- 6: lengthwise axis of elongated element
- 7a, b: half part
- 8: connecting section
- 9: curve
- 10: bend
- 11: cell terminal
- 12: cell
- 13: module
- 14: module terminal
- 15: battery management controller
- 16: BMC terminal
- 17: casing
- 18: battery terminal

- 100: battery

- A: angle
- L: length
- M: middle axis
- P: imaginary plane
- T: thickness
- W: width
- X: x-direction

## Claims

1. A busbar (1),
- made of a solid metal or alloy, having
- length (L) in a x-direction (X), and width (W) as well as thickness (T) said width and thickness being perpendicular to the length, the busbar (1) comprising
- a length compensation element (2), dividing the busbar in a first section (3a) on a first side of the length compensation element (2) and a second section (3b) on a second side of said length compensation element (2), said length compensation element (2) being wider as the first section (3a) and the second section (3b), said length compensation element (2) comprising
- at least two elongated elements (4) of the solid metal or alloy and an opening (5) between said elongated elements (4), the lengthwise axis (6) of the elongated elements crossing the x-direction (X) and the opening (5) extending through the thickness (T) of the length compensation element (2),
- the at least two elongated elements (4) configured to bend such that thermal expansion of the busbar (1) in at least said x-direction (X) is compensated.

2. The busbar as claimed in claim 1, wherein
- the combined cross-sectional area of the at least two elongated elements (4) is same or at least substantially same as the cross-sectional area of the first section (3a) and the cross-sectional area of the second section (3b).

3. The busbar as claimed in claim 1 or 2, wherein
- the length compensation element (2) comprises a first half part (7a) and a second half part (7b), arranged side by side in relation to the x-direction (X), and that
- the first section (3a) of the busbar is arranged to join to the first half part (7a), and
- the second section (3b) of the busbar is arranged to join to the second half part (7b).

4. The busbar as claimed in claim 3, wherein
- the second section (3b) of the busbar is arranged to join to the length compensation element () by a connecting section (8) that is configured to displace said second section (3b) sideways from the side of the second half part (7b) to the side of the first half part (7a).

5. The busbar as claimed in any of the preceding claims, wherein
- the at least two elongated elements (4) are arranged parallel.

6. The busbar as claimed in any of the preceding claims, wherein
- the at least two elongated elements (4) are arranged perpendicular to the x-direction (X).

7. The busbar as claimed in any of the preceding claims, wherein
- the opening (5) is straight.

8. The busbar as claimed in any of claims 1 - 6, wherein
- the opening (5) comprises at least one curve (9).

9. The busbar as claimed in claim 8, wherein
- the opening (5) is L-shaped.

10. The busbar as claimed in any of the preceding claims, wherein
- the length compensation element (2), the first section (3a) and the second section (3b) are on a same imaginary plane.

11. The busbar as claimed in any of claims 1 - 9, wherein
- the length compensation element (2) comprises a bend (10) around the x-direction (X), and wherein
- the width (Wa) of the first section is on a first imaginary plane (P1) and the width (Wb) of the second section is on a second imaginary plane (P2) that cuts said first imaginary plane.

12. The busbar as claimed in any of the preceding claims, wherein
- the first section (3a), the second section (3b) and the length compensation element (2) are of a same piece of the material.

13. The busbar as claimed in any of the preceding claims, having
- a monolayer structure.

14. The busbar as claimed in any of claims 1 - 12, having
- a multilayer structure.

15. A battery (100), comprising
- the busbar as claimed in any of claims 1 - 14 arranged for connecting selected current flowing routes thereof.
